Europäisches Patentamt

European Patent Office

Office européen des brevets

(11) Veröffentlichungsnummer: **0 604 831 A2**

## (12) EUROPÄISCHE PATENTANMELDUNG

(21) Anmeldenummer: **93120192.5**

(22) Anmeldetag: **15.12.93**

(51) Int. Cl.⁵: **C08L 61/14**, C08G 8/28, C09D 161/14, C09D 5/34, C08K 3/04

(30) Priorität: **23.12.92 DE 4243797**

(43) Veröffentlichungstag der Anmeldung:
**06.07.94 Patentblatt 94/27**

(84) Benannte Vertragsstaaten:
**AT BE CH DE ES FR GB IT LI NL PT SE**

(71) Anmelder: **HOECHST AKTIENGESELLSCHAFT**

**D-65926 Frankfurt(DE)**

(72) Erfinder: **Hesse, Wolfgang, Dr.**
**Rossbachhöhe 42**
**D-65232 Taunusstein(DE)**
Erfinder: **Rauhut, Klaus, Dr.**
**Pfingstbornstrasse 13**
**D-65207 Wiesbaden(DE)**

(54) **Härtbare phenolharzmodifizierte Furanharze als Bindemittel für Kitte und Beschichtungsmassen mit verbesserter Thermostabilität, Verfahren zu ihrer Herstellung und ihre Verwendung.**

(57) Herstellung von härtbaren phenolharzmodifizierten Furanharzen auf Basis von Kondensationsprodukten aus Alkylidenpolyphenolen vom Novolaktyp und Furfurylalkohol oder dessen Gemischen mit anderen reaktiven Furanderivaten, ferner deren härtbare Lösungen in reaktiven organischen Lösungsmitteln, Verfahren zu ihrer Herstellung und ihre Verwendung als Bindemittel mit verbesserter Thermostabilität zur Herstellung von selbsthärtenden, chemostabilen und hochtemperaturbeständigen Kitten und Beschichtungsmassen.

EP 0 604 831 A2

Die Erfindung betrifft härtbare phenolharzmodifizierte Furanharze auf Basis von Kondensationsprodukten aus Alkylidenpolyphenolen vom Novolaktyp und Furfurylalkohol oder dessen Gemischen mit anderen reaktiven Furanderivaten, ferner deren härtbare Lösungen in reaktiven organischen Lösungsmitteln, Verfahren zu ihrer Herstellung und ihre Verwendung als Bindemittel mit verbesserter Thermostabilität zur Herstellung von selbsthärtenden, chemostabilen und hochtemperaturbeständigen Kitten.

Es ist bekannt, Polykondensate des Furfurylalkohols als säurehärtbare Bindemittelharze für chemikalienbeständige, thermostabile Kitte zu verwenden. Als weitere Hauptkomponente enthalten diese Kitte inerte Füllstoffe, denen als Härtungskatalysator Säuren oder säureabspaltende Substanzen beigemischt sind, die ohne Wärmezufuhr eine Härtung des Bindemittelharzes bewirken können.

Aus der DE-PS 2926053 ist bekannt, Furfurylalkohol mit einem Hydroxymethylgruppen enthaltenden Alkylphenol vom Resoltyp auf der Basis von bifunktionellen Alkylphenolen bei erhöhter Temperatur umzusetzen und das Reaktionsprodukt in mindestens einem reaktiven Verdünner aus der Gruppe Hydroxybenzylalkohol, niedermolekularer Epoxidverbindungen, Furfurol, Difuryläther, Furfurylalkohol zu lösen, wodurch die während der späteren Härtung bei reinen Furanharzkitten bekanntlich auftretende starke Nachschwindung vermeidbar sein soll. Dabei beeinflußt insbesondere die Verwendung von niedermolekularen Epoxidverbindungen das elastische Verhalten der Härtungsprodukte nicht negativ, sie führt aber nicht zu einer wesentlich verbesserten Thermostabilität und führt andererseits zu einer nachteiligen Empfindlichkeit der Härtungsprodukte gegenüber aggressiv wirkenden organischen Lösungsmitteln, wie sie in der Praxis häufig verwendet werden, wie z.B. Ketone, chlorierte aliphatische Kohlenwasserstoffe, aromatische Kohlenwasserstoffe und Ester.

Die Anwesenheit von Furfurylalkohol in Kunststoffzementen aus 1,5 bis 1,6 Gew.-% Furfurylalkhol, 14 bis 16 Gew.-% Furan/Epoxidharz-Bindemittel, 2,8 bis 3,2 Gew.-% Polyethylenpolyamin und mineralischen Füllstoffen soll, wie aus der SU-PS 619464 bekannt ist, einerseits die Festigkeit dieser Zemente erhöhen und andererseits die Nachschwindung vermindern. Solche Produkte finden daher Verwendung in der Bauindustrie zur Herstellung von korrosionsfesten Überzügen sowie als chemisch widerstandsfähiges Fußbodenbeschichtungsmaterial. Ihre Schrumpfung bei der Aushärtung beträgt ca. 0,75 % und liegt damit relativ hoch. Diese zwar vernetzbaren Produkte eignen sich jedoch nicht für die Herstellung von Kittharzen oder von Kitten, die zu Anwendungen für hohe chemische Beanspruchungen vorgesehen sind, da sie wegen ihres Amingehaltes die zur Aushärtung des Kittes erforderliche Säurekatalyse inhibieren und im vernetzten Zustand keine ausreichende Säure- und Alkalifestigkeit aufweisen.

Aus der US-PS 4100314 ist ein vernetzbares Überzugsmittel für teerimprägnierte Kohlekörper in Form einer Kunstharzlösung bekannt, die vernetzende Furanverbindungen, z.B. eine Mischung aus gleichen Teilen Furfurol und Furfurylalkohol, Diethylsulfat als Katalysator und Epoxidharze enthält. Zur Vernetzung ist jedoch eine Erwärmung auf Temperaturen zwischen 100 und 135 °C erforderlich, so daß allein schon aus diesem Grund das Produkt nicht für die Herstellung von Kitten geeignet ist, da Kitte bei Raumtemperatur oder zumindest in der Nähe der Raumtemperatur vernetzbar sein müssen.

Es ist ferner bekannt, daß man Furanharze mittels verschiedener Zusatzkomponenten vielfältig modifizieren kann. So kann man Furfurol mit Phenol zu Novolaken umsetzen, die zur Herstellung von Phenolharz-Preßmassen verwendet werden können. Harze dieser Art sind aber wegen ihrer zu hohen Eigenviskosität nicht für die Herstellung von Kitten brauchbar.

Es ist auch bekannt, Kondensate des Furfurylalkohols mit Harnstoff und Formaldehyd zu modifizieren und diese Polykondensate als Bindemittel zur Herstellung von Kernformkörpern für den Metallguß zu verwenden. Aber auch durch diese Modifizierung sowie durch die ebenfalls bekannte Einbeziehung von Phenol als Modifizierungskomponente läßt sich die mangelnde Chemikalienbeständigkeit und die unzureichende thermische Beständigkeit dieser Polykondensate nicht so stark verbessern, wie es für deren Verwendung als vernetzbares Bindemittel zur Herstellung von thermostabilen Kitten und Beschichtungsmassen üblicherweise erforderlich wäre.

Auch die bekannte Reaktion von Furfurylalkohol mit Phenolen oder mit Resorcin führt nicht zu Harzen, die für Kitte oder Beschichtungsmassen geeignet sind, sondern zu Harzen, die nur als Bindemittel für Leime, Preßmassen oder Lacke brauchbar sind. Auch die Umsetzung von Hydroxybenzylalkohol mit Furfurylalkohol ergibt kein brauchbares Kittharz und bei dem Versuch, derartige Polykondensate mit einem saure Härtungskatalysatoren enthaltenden Füllstoff zu mischen, erfolgt sogleich eine stürmische Polymerisationsreaktion. Das dabei resultierende Härtungsprodukt schrumpft und ist außerdem nicht ausreichend beständig gegen Alkali.

Aus der DE-OS 2750704 ist die Herstellung von Umsetzungsprodukten aus hydroxyaromatischen Verbindungen, Formaldehyd und Furfurylalkohol bekannt, wobei der Furfurylalkohol auch im Überschuß eingesetzt werden kann, so daß er als Lösungsmittel wirkt. Außerdem kann das Reaktionsprodukt mit sauren Katalysatoren gehärtet werden. Die dabei resultierenden und durch den Furfurylalkohol modifizierten

EP 0 604 831 A2

Resolharze lassen sich mit reaktiven Verbindungen, wie z.B. Isocyanaten, zu flammwidrigen kompakten Formkörpern oder zu Schaumstoffen verarbeiten. Eine Verwendung zur Herstellung von Kitten ist weder beschrieben noch erwähnt.

Die bei der Herstellung von säurehärtenden Kitten bisher üblicherweise eingesetzten Furanharze ergeben bekanntlich Kitte mit sehr guter Chemikalienbeständigkeit. Die gehärteten Furanharzkitte sind insbesondere hoch alkalibeständig. Ein erheblicher Nachteil von gehärteten Furanharzen besteht aber darin, daß sie beim Erhitzen unter Nachschwindung zerplatzen und in Kleinteile zerfallen. Dadurch kann ihre eigentlich sehr hohe chemisch-thermische Beständigkeit nicht ausgenützt werden. Die mechanisch-thermische Beständigkeit begrenzt die Verwendbarkeit auf max. 200 °C bei der Verwendung als Kitt. Ein analoges Verhalten zeigen auch furanharzgebundene Beschichtungsmassen.

Ein weiterer erheblicher Nachteil ist neben der hohen Nachschwindung die hohe Sprödigkeit der Kitte und Beschichtungsmassen aus Furanharzen. Diese Sprödigkeit drückt sich in einem hohen Elastizitätsmodul von 1,2 bis 2 x 10$^4$ N/mm$^2$ aus. Diese Sprödigkeit kann dazu führen, daß in mit Furanharzkitten verlegten Plattenbelägen aus säurefesten keramischen Materialien leicht Ablösungen vom Untergrund und Risse auftreten können, insbesondere wenn durch Temperaturwechsel bzw. Temperaturänderung die unterschiedlichen Wärmeausdehnungskoeffizienten von Kitt, keramischen Materialien und dem Untergrund wirksam werden. Der Verbund von Kitt, Keramikmaterial und Untergrund ist gegenüber Rißbildung und Ablösung bei Temperaturwechsel nämlich umso unempfindlicher, je niedriger der Elastizitätsmodul des Kittes ist. Vorteilhaft liegt der Elastizitätsmodul von technisch interessanten Kitten bei <1,2 x 10$^4$ N/mm$^2$. Der Kitt ist dann weniger spröde, so daß er größere Verformbarkeiten ermöglicht, ohne daß es zur Rißbildung und Ablösung kommt. Der Elastizitätsmodul (E-Modul) kann z.B. durch Bestimmung des Biege-Elastizitätsmoduls an ausgehärteten Kittprüfkörpern bei Raumtemperatur ermittelt werden.

Aufgrund der den bekannten Furanharzen anhaftenden und oben u.a. bereits erwähnten entscheidenden Nachteile konnte ihre Verwendung als Bindemittel für extrem hochtemperaturbeständige und chemostabile Kitte und Beschichtungsmassen bisher keine besondere Bedeutung erlangen.

Aus der EP-OS 0184106 sind daher ferner epoxidharzmodifizierte härtbare Furanharze bzw. Furanharzlösungen für Kitte und Beschichtungsmassen sowie deren Herstellung durch Umsetzung von in Furfurylalkohol oder dessen Gemischen mit anderen Furanderivaten gelösten Epoxidharzen mit Furfurylalkohol in Gegenwart von Katalysatoren bei 20 bis 200 °C bekannt, wobei gegebenenfalls mitverwendete Säurekatalysatoren nach beendeter Umsetzung neutralisiert werden. Die solchermaßen hergestellten härtbaren Harze und Harzlösungen besitzen eine gute Lagerungsstabilität und daraus unter Zusatz von Härtern hergestellte gehärtete Kitte zeigen alle bekannten vorteilhaften Eigenschaftsmerkmale von Furanharzkitten, insbesondere eine ausgezeichnete chemische Beständigkeit und eine thermische Beständigkeit bis zu Temperaturen von maximal 320 °C.

Aufgrund gestiegener Qualitätsanforderungen und neuer Aufgabenstellungen in der Praxis ist es wünschenswert, insbesondere die Temperaturbeständigkeit von gehärteten Kitten sowie deren Dauertemperaturbeständigkeit bei ihrer Verwendung als Bindemittel für keramische Ausmauerungen ohne Beeinträchtigung ihrer chemischen Beständigkeit und ihrer elastischen Eigenschaften weiter zu erhöhen. Der Erfindung lag somit die Aufgabe zugrunde, härtbare Furanharze verfügbar zu machen, aus denen Kitte herstellbar sind, die auch bei Temperaturen deutlich oberhalb von 320 °C ein vorteilhaftes Eigenschaftsspektrum aufweisen können.

Es wurde nun überraschenderweise gefunden, daß man die gestellte Aufgabe dadurch lösen kann, daß man anstelle von Furanharzen auf der Basis von epoxidharzmodifizierten Furfurylalkoholkondensaten nach EP-OS 0 184 106 als Bindemittelharze Kondensationsprodukte aus Alkylidenpolyphenolen vom Novolaktyp mit Furfurylalkohol oder mit Mischungen aus Furfurylalkohol und anderen reaktiven Furanderivaten verwendet, wie sie durch Umsetzung der genannten Komponenten bei Reaktionstemperaturen von vorzugsweise 80 bis 250 °C in Gegenwart von schwach sauren Katalysatoren unter Wasserabspaltung, vorzugsweise unter fortlaufender, insbesondere destillativer, Entfernung des Reaktionswassers aus dem Reaktionsgleichgewicht, erhalten werden können.

Als Lösungsmittel zur Herstellung von Harzlösungen können vorzugsweise der reaktive Furfurylalkohol oder Gemische aus Furfurylalkohol mit anderen reaktiven Furanderivaten verwendet werden. Auch die Mitverwendung von inerten Lösungsmitteln kann in manchen Fällen vorteilhaft sein, insbesondere bei deren zusätzlicher Verwendbarkeit als Schleppmittel zum destillativen Auskreisen des Reaktionswassers während der Kondensationsreaktion. Besonders bevorzugtes reaktives Lösungsmittel ist Furfurylalkohol. Bevorzugt sind ferner reaktive Lösungsmittelgemische aus Furfurylalkohol mit bis zu 50 Gew.-% anderen reaktiven Furanderivaten, bezogen auf das Lösungsmittelgemisch, vorzugsweise mit Furfurol und/oder Difuryläther. Lösungen von erfindungsgemäßen phenolharzmodifizierten Furanharzen in den reaktiven Lösungsmitteln bzw. in Mischungen der letzteren mit inerten Lösungsmitteln besitzen in Abwesenheit von Härtungsmitteln

3

eine hohe Lagerungsstabilität, was ihre Verwendbarkeit begünstigt und erleichtert.

Kitte, die als Bindemittel ein erfindungsgemäß phenolharzmodifiziertes Furanharz auf der Basis von Kondensationsprodukten aus Alkylidenpolyphenolen vom Novolaktyp und Furfurylakohol oder dessen Mischungen mit anderen reaktiven Furanderivaten enthalten, besitzen neben den erwünschten Eigenschaftsmerkmalen von bekannten Furanharzkitten die überraschende Eigenschaft, daß sie ohne sonstige Nachteile sehr schwindungsarm aushärten können, versprödungsarm sind und in ausgehärteter Form eine Temperaturbeständigkeit bis zu 400 °C besitzen, was bezüglich der Thermostabilität mit versprödungsarmen bekannten Furanharzkitten bzw. modifizierten Furanharzkitten bisher nicht erreichbar war. Bei 30-minütigen thermischen Beständigkeitsprüfungen in der Fuge von keramischen Platten lassen sich mit ausgehärteten Kitten auf der Basis von erfindungsgemäßen phenolharzmodifizierten Furanharzen sogar Beständigkeiten bis zu 600 °C erreichen. Darüber hinaus besitzen die ausgehärteten erfindungsgemäßen Kitte eine außerordentlich gute Chemikalienbeständigkeit, eine sehr gute Dauertemperaturbeständigkeit und eine große Langzeitgebrauchsdauer, und die härtungsreaktiven Ausgangsharzlösungen benötigen eine, vergleichsweise zum bekannten Stand der Furanharztechnik, deutlich verkürzte Härtungszeit.

Gegenstand der Erfindung sind daher härtbare phenolharzmodifizierte Furanharze für Kitte und Beschichtungsmassen auf der Basis von Kondensationsprodukten aus Furanverbindungen und Phenolen sowie deren Lösungen in organischen Lösungsmitteln, dadurch gekennzeichnet, daß die härtbaren phenolharzmodifizierten Furanharze aus Kondensationsprodukten von Alkylidenpolyphenolen vom Novolaktyp und Furfurylalkohol oder Gemischen aus Furfurylalkohol und anderen reaktiven Furanderivaten, vorzugsweise aus Furfurylalkohol, bestehen, in denen die Alkylidenpolyphenole in ortho- und/oder para-Stellungen zu den phenolischen Hydroxylgruppen durch 2-Furylmethylreste substituiert sind, die durch Umsetzung von Alkylidenpolyphenolen und Furfurylalkohol oder dessen Gemischen mit anderen reaktiven Furanderivaten in Gegenwart von schwach sauren Katalysatoren unter Wasserabspaltung bei Reaktionstemperaturen von 80 bis 250 °C, vorzugsweise 140 bis 250 °C, insbesondere 150 bis 220 °C, erhalten wurden, wobei der saure Katalysator nach beendeter Umsetzung gegebenenfalls neutralisiert oder eliminiert wurde, oder die Furanharze mit im Reaktionsgemisch verbliebenem überschüssigem oder nachträglich beigemischtem Furfurylalkohol oder dessen Gemischen mit anderen reaktiven organischen Lösungsmitteln, vorzugsweise aus der Gruppe Furfurol, Hydroxymethylfurfurol, Difuryläther und Hydroxybenzylalkohol, insbesondere Furfurylalkohol, gegebenenfalls mitzusätzlichen Anteilen inerter Lösungsmittel, härtungsreaktive, gegebenenfalls niedrigviskose Harzlösungen bilden.

Unter dem Begriff Alkylidenpolyphenole sind dabei auch Polyalkylidenpolyphenole sowie die allgemein als Novolake bekannten kondensierten Phenolharze zu verstehen, die aus Phenolen und Oxoverbindungen unter saurer Katalyse hergestellt wurden und denen als Ausgangsphenole bevorzugt Phenol, Kresol, Xylenole, Alkylphenole oder Mischungen dieser Verbindungen, ferner vorzugsweise Bisphenole, insbesondere Bisphenol A und Bisphenol F, sowie vorzugsweise höherkondensierte Polyphenole, die Molekularmassen von vorzugsweise 200 bis 3000, insbesondere 300 bis 800, aufweisen, wobei die Molekularmassen als Zahlenmittel der Molekularmassen definiert sind, zugrundeliegen. Als Oxoverbindungen werden vorzugsweise Aldehyde, insbesondere aliphatische Aldehyde, besonders bevorzugt Formaldehyd, insbesondere dessen konzentrierte wäßrigen Lösungen, oder Ketone, vorzugsweise Aceton, verwendet.

Gegenstand der Erfindung sind ferner härtbare Harze für Kitte und Beschichtungsmassen, welche die vorstehend beschriebenen und erfindungsgemäß durch Alkylidenpolyphenole modifizierten härtungsreaktiven Furanharze enthalten, vorzugsweise zu mindestens 10 Gew.-% enthalten, bezogen auf die härtbare Harzmischung, deren niedrigviskose Lösungen in reaktiven organischen Lösungsmitteln, vorzugsweise in Furfurylalkohol oder in Gemischen aus Furfurylalkohol und anderen reaktiven Furanderivaten und gegebenenfalls zusätzlich inerten organischen Lösungsmitteln, sowie deren Verwendung zur Herstellung von Kitten und Beschichtungsmassen.

Die erfindungsgemäß verwendeten Alkylidenpolyphenole sind grundsätzlich mehrkernige Phenole mit mindestens zwei, vorzugsweise mehr als zwei, phenolischen OH-Gruppen im Molekül, die jeweils mehr als ein reaktives Kernwasserstoffatom in ortho-/ortho- und/oder para-Stellung pro phenolischer OH-Gruppe besitzen. Die Alkylidenpolyphenole werden vorzugsweise vor ihrer Umsetzung mit Furfurylalkohol nach bekannten Methoden weitgehend oder vollständig von den gegebenenfalls darin noch vorhandenen und nicht zu Alkylidenpolyphenolen umgesetzten Ausgangsphenolen befreit.

Das gewünschte stöchiometrische Verhältnis zwischen Alkylidenpolyphenolen und Furfurylalkohol oder Mischungen aus Furfurylalkohol und anderen reaktiven Furanderivaten für die Kondensationsreaktion kann auf der Grundlage des molaren phenolischen Äquivalentgewichtes der Alkylidenpolyphenole berechnet werden. Es ist erfindungsgemäß in weiten Grenzen variabel. Nach oben ist es durch die Anzahl der verfügbaren reaktiven Kernwasserstoffatome in ortho- oder para-Stellung zu den phenolischen Hydroxylgruppen begrenzt. Es kann jedoch in vielen Fällen vorteilhaft sein, diese Obergrenze des reaktiven

4

Potentials nicht voll auszuschöpfen, sondern darunter zu bleiben. Bevorzugt werden daher zwischen 0,1 und 1,5 Mol, insbesondere zwischen 0,2 und 0,8 Mol, Furfurylalkohol, oder diesem molar äquivalente Mischungen mit anderen vergleichbar reaktiven Furanderivaten, pro Moläquivalent phenolischer Hydroxylgruppe eingesetzt.

Die Umsetzung der Alkylidenpolyphenole mit dem Furfurylalkohol oder dessen Mischungen mit anderen vergleichbar reaktiven Furanderivaten erfolgt in Gegenwart von schwach sauren Katalysatoren, im Temperaturbereich von 80 bis 250 °C, vorzugsweise 140 bis 250 °C. Dabei reagiert z.B. beim Furfurylalkohol dessen OH-Gruppe mit einem reaktiven Kernwasserstoffatom eines phenolischen Restes des Alkylidenpolyphenols unter Wasserabspaltung und Addition des Furfurylalkoholrestes an das Alkylidenpolyphenol. Bevorzugt wird bei dieser Kondensationsreaktion das Reaktionswasser kontinuierlich, vorzugsweise destillativ, aus dem Reaktionsgleichgewicht entfernt, was die Umsetzung unter Bildung von Kondensationsprodukten begünstigt und beschleunigt.

Die kontinuierliche Entfernung des Reaktionswassers aus dem Reaktionsgemisch kann bevorzugt durch azeotrope Destillation unter Mitverwendung eines Schleppmittels und Rückführung des letzteren im Kreislauf erfolgen. Dabei ist es bevorzugt, die Kondensationsreaktion bei Temperaturen zwischen 150 und 220 °C durchzuführen und als schwach saure Katalysatoren schwache Säuren zu verwenden, vorzugsweise z.B. Oxalsäure, Malonsäure, Maleinsäure, Maleinsäureanhydrid, Fumarsäure, Bernsteinsäure, Weinsäure oder Zitronensäure. Als Schleppmittel für die azeotrope Destillation können bevorzugt destillierfähige unpolare Kohlenwasserstoffe, vorzugsweise aromatische Kohlenwasserstoffe, insbesondere Toluol oder Xylol, verwendet werden.

Als vergleichbar reaktive Furanderivate, die gegebenenfalls im Gemisch mit Furfurylalkohol eingesetzt werden, kommen vorzugsweise Furfurol und Hydroxymethylfurfurol infrage. Dabei beträgt der Anteil des Furfurylalkohols in solchen Mischungen vorzugsweise mindestens 50 Gew.-%, insbesondere mindestens 70 Gew.-%, bezogen auf die Mischung der reaktiven Furanderivate. Besonders bevorzugt ist die alleinige Verwendung von Furfurylalkohol als reaktive Furankomponente. Auch bei der Herstellung von Lösungen erfindungsgemäßer alkylidenpolyphenolmodifizierter Furanharze in reaktiven Lösungsmitteln für die Herstellung von Kitten und Beschichtungsmassen ist die alleinige Verwendung von Furfurylalkohol als reaktives Lösungsmittel bevorzugt.

Die erfindungsgemäß durch Kondensation von Alkylidenpolyphenolen und Furfurylalkohol in Gegenwart von schwach sauren Katalysatoren hergestellten modifizierten und härtungsreaktiven Furanharze bzw. gegebenenfalls deren härtungsreaktive Lösungen in organischen Lösungsmitteln lassen sich für manche Anwendungen vorteilhaft mit anderen Substanzen, wie z.B. selbstvernetzenden oder plastifizierend wirkenden Verbindungen, vermischen und dadurch in ihren Eigenschaften weiter modifizieren. Als plastifizierende Zusatzkomponenten kommen bevorzugt Epoxidharze infrage.

Zur Herstellung von selbsthärtenden Kitten oder Beschichtungsmassen werden die erfindungsgemäßen härtungsreaktiven phenolharzmodifizierten Furanharzlösungen mit inerten Füllstoffen und einem Härter vermischt, der eine Härtung der härtungsreaktiven Harzlösung bereits bei Raumtemperatur bewirkt. Bevorzugt werden der Härter und der inerte Füllstoff zu einer lagerungsstabilen Mischung innig vermischt und diese Mischung dann bedarfsweise zur Kitt- bzw. Bindemittelmassen- bzw. Beschichtungsmassenherstellung mit den o.g. erfindungsgemäßen härtungsreaktiven phenolharzmodifizierten Furanharzlösungen in dem gewünschten Mischungsverhältnis bei Raumtemperatur homogen vermischt, wonach bereits bei der Mischungstemperatur die Härtung des Kittes bzw. der Bindemittelmasse bzw. der Beschichtungsmasse alsbald einsetzt. Der Härter muß dabei in einem solchen Mengenanteil eingesetzt werden, daß nach erfolgter Vermischung mit der reaktiven Harzlösung der resultierende selbsthärtende Kitt oder die resultierende selbsthärtende Bindemittel- bzw. Beschichtungsmasse noch mindestens ca. 30 Minuten bis 2 Stunden verarbeitungsfähig, d.h. weich bis fließfähig, bleiben, ehe sie zu unlöslichen festen Kittmassen oder Beschichtungsmassen erhärten. Die erfindungsgemäßen härtungsreaktiven phenolharzmodifizierten Furanharzlösungen können auch ohne Inertstoff- bzw. Füllstoffzusatz als Beschichtungs- oder Vergußmassen verwendet und durch bedarfsdosierten Härterzusatz bei Normaltemperatur oder unter Erwärmung gehärtet werden.

Weiterer Gegenstand der Erfindung sind daher selbsthärtende Kitte und Beschichtungsmassen, die ein härtungsreaktives phenolharzmodifiziertes Furanharz, Furfurylalkohol und gegebenenfalls weitere organische Lösungsmittel sowie einen Härter enthalten, dadurch gekennzeichnet, daß sie durch Vermischen folgender Komponenten erhältlich sind:

A) Einem härtungsreaktiven phenolharzmodifizierten Furanharz auf der Basis von Kondensationsprodukten aus Alkylidenpolyphenolen und Furfurylalkohol oder Mischungen von Furfurylalkohol mit anderen reaktiven Furanderivaten, hergestellt in Gegenwart eines sauren Katalysators bei Reaktionstemperaturen von vorzugsweise 80 bis 250 °C und gelöst in Furfurylalkohol oder dessen Gemischen mit anderen reaktiven Furanderivaten oder anderen reaktiven organischen Lösungsmitteln, gegebenenfalls unter Zusatz von inerten organischen Lösungsmitteln,

B) mindestens einem Füllstoff, und

c) mindestens einem Härter für die Harzlösung A), vorzugsweise einem sauren Härtungskatalysator.

Die Vermischung der Komponenten A), B) und C) erfolgt vorzugsweise bei normaler Raumtemperatur.

Das Gewichtsverhältnis der härtungsreaktiven phenolharzmodifizierten Furanharzlösung A) zu der Summe der Komponenten B) und C) beträgt vorzugsweise 1 : 0,5 bis 7, insbesondere 1 : 1 bis 4.

Die eingesetzten härtungsreaktiven phenolharzmodifizierten Furanharzlösungen A) besitzen einen Anteil an härtungsreaktivem phenolharzmodifiziertem Furanharz von vorzugsweise 10 bis 75 Gew.-%, insbesondere 25 bis 70 Gew.-%, besonders bevorzugt 35 bis 55 Gew.-%, bezogen auf die gesamte härtungsreaktive phenolharzmodifizierte Furanharzlösung A).

Als reaktive Lösungsmittel zur Herstellung der härtungsreaktiven phenolharzmodifizierten Furanharzlösungen dienen vorzugsweise Furfurylalkohol oder dessen Mischungen mit anderen reaktiven Verdünnungsmitteln, wobei in den Mischungen der Furfurylalkoholanteil vorzugsweise mindestens 90 Gew.-%, bezogen auf die Mischung, beträgt. Als andere reaktive Verdünnungsmittel können in den Mischungen z.B. Hydroxybenzylalkohol, niedrigmolekulare Epoxidverbindungen, insbesondere Diglycidyläther und Diphenylolpropandiglycidyläther, ferner vorzugsweise Furfurol und Difuryläther den Furfurylalkohol substituieren. Dabei kann z.B. der Furfurylalkohol bei der erfindungsgemäßen Kondensationsreaktion mit den Alkylidenpolyphenolen bevorzugt bereits als Reaktionskomponente im Überschuß eingesetzt werden und die überschüssige Menge nach Beendigung der Umsetzung als reaktives Lösungsmittel im Reaktionsgemisch verbleiben.

Die härtungsreaktive Harzlösung kann zusätzlich auch noch inerte, nichtreaktive organische Lösungsmittel bzw. Verdünnungsmittel enthalten. Als inerte organische Lösungs- bzw. Verdünnungsmittel kommen vorzugsweise aromatische Lösungsmittel, insbesondere Toluol oder Xylol, infrage. Die Viskosität der härtungsreaktiven phenolharzmodifizierten Furanharzlösungen A) liegt vorzugsweise im Bereich zwischen 50 und 20000 mPa.s, insbesondere zwischen 100 und 1500 mPa.s, gemessen im Höppler-Viskosimeter nach DIN 53015 bei 23 °C.

Die erfindungsgemäß hergestellten härtungsreaktiven phenolharzmodifizierten Furanharzlösungen A) besitzen in Abwesenheit von Härtern C) eine praktisch unbegrenzte Lagerungsfähigkeit.

Als Füllstoffe B) werden zur Herstellung von Kitten vorzugsweise Gesteinsmehle, insbesondere feinpulverige Tone, Schamottemehle, Quarzmehle, ferner Bariumsulfatpulver und besonders bevorzugt Kohlenstoffpulver, insbesondere Kohlemehl, Koksmehl und Graphitmehl, z.B. Kunstgraphitmehl, verwendet.

Als Härter C) für die Härtung der Kitte kommen vorzugsweise stark saure oder starke Säuren bildende Substanzen infrage. Bevorzugt sind z.B.

a) anorganische oder organische Säuren, insbesondere aus der Gruppe Schwefelsäure, Salzsäure, Phosphorsäure, Phosphonsäuren, Sulfonsäuren, wie Amidosulfonsäure, Mono- und Disulfonsäuren von Benzol, Toluol, Xylol und von Phenolen, Naphthalindisulfonsäuren, ferner Harnstoffaddukte von aromatischen und hydroxyaromatischen Sulfonsäuren,

b) säureabspaltende Substanzen, vorzugsweise aus der Gruppe der Sulfochloride, insbesondere Sulfonsäurechloride, wie Benzolsulfochlorid, Toluolsulfochlorid, Xylolsulfochlorid, Naphthalindisulfonsäurechlorid, ferner saure Schwefelsäuremonoester, saure Phophorsäuremonoester oder - diester, saure Salze der Schwefelsäure oder Phosphorsäure, vorzugsweise deren Alkalisalze, insbesondere Natriumsalze.

Für die Herstellung von Kitten werden die Füllstoffe B) und der Härter C) vorzugsweise in einer vorgemischen Pulverform als sogenanntes Kittmehl verwendet. In diesen pulverförmigen Gemischen beträgt der Anteil der Härterkomponente C) vorzugsweise 4 bis 12 Gew.-%, insbesondere 6 bis 8 Gew.-%, bezogen auf das Gemisch aus Füllstoff B) + Härter C). Letztere Gemische sind in korrosionsfesten und dicht verschlossenen Behältern unbegrenzt lagerungsfähig.

Die Herstellung erfindungsgemäßer selbsthärtender Kitte erfolgt in der Weise, daß die härtungsreaktive Lösung des phenolharzmodifizierten Furanharzes A) unmittelbar vor dem Gebrauch des Kittes mit dem Füllstoff B) und dem Härter C) innig vermischt wird, wobei die Komponenten B) und C) vorzugsweise in vorgemischter Form als sogenanntes Kittmehl eingesetzt und mit der härtungsreaktiven Furanharzlösung A), vorzugsweise bei Raumtemperatur, vermischt werden. Der resultierende Kitt wird nach üblichen Methoden sogleich auf oder zwischen die zu verkittenden Materialien gebracht, geglättet und aushärten lassen, vorzugsweise bei Raum- oder Umgebungstemperatur.

Zur Bewertung der Kittqualität werden u.a. die Eigenschaften der härtungsreaktiven phenolharzmodifizierten Furanharzlösung, die Kitteigenschaften, insbesondere die Verarbeitungseigenschaften, nach dem Vermischen der härtungsreaktiven phenolharzmodifizierten Furanharzlösung A) mit dem Kittmehl, der Verlauf der Härtung des Kitts und die chemischen und physikalischen Eigenschaften des ausgehärteten Kitt-Endproduktes herangezogen. Das erfindungsgemäß verwendete härtungsreaktive phenolharzmodifizierte Furanharz sollte für die Anwendung als Kittbindemittel einen möglichst niedrigen Kondensationsgrad und seine härtungsreaktive Lösung eine, u.a. durch den niedrigen Kondensationsgrad bedingte, niedrige Viskosität besitzen, damit sie leicht und rasch fließen und das Kittmehl gut benetzen und durchdringen kann. Gegebenenfalls kann dieses Eigenschaftsbild durch Änderung des Anteils an reaktiven oder inerten Verdünnungsmitteln variiert und die Verarbeitbarkeit des Kittes dadurch optimiert werden. Eine gute Lagerungsbeständigkeit der härtungsreaktiven phenolharzmodifizierten Furanharzlösung A) ist eine weitere wichtige Voraussetzung für eine optimale Verwendbarkeit des Produktes. Der Kondensationsgrad des Harzes sollte sich daher während der Lagerung der Harzlösung A) gegebenenfalls nur unwesentlich erhöhen, denn ein übermäßiger Viskositätsanstieg würde zu einer schlechteren Benetzung des Kittmehls und damit zu Verarbeitungsfehlern und Schäden führen. Gegebenenfalls kann nach beendeter Kondensationsreaktion bei der Herstellung des erfindungsgemäß durch Alkylidenpolyphenole modifizierten härtungsreaktiven Furanharzes vorteilhaft der schwach saure Kondensationskatalysator eliminiert oder durch Basenzusatz neutralisiert werden, so daß in der resultierenden härtungsreaktiven phenolharzmodifizierten Furanharzlösung A) keine säurekatalysierten Vernetzungsreaktionen während der Lagerungszeit auftreten können.

Bei der Herstellung des selbsthärtenden Kittes, die unmittelbar vor dessen Anwendung erfolgt, setzt nach dem Vermischen des Kittmehls ( = Gemisch aus Füllstoff B) und Härter C)) mit der härtungsreaktiven phenolharzmodifizierten Furanharzlösung A) durch die katalytische Wirkung des Härters C) sogleich eine Polymerisationsreaktion unter Vergrößerung der härtungsreaktiven phenolharzmodifizierten Furanharzmoleküle durch Polykondensation, Polymerisation und Copolymerisation untereinander sowie mit den reaktiven Lösungsmittelbestandteilen, vorzugsweise mit Furfurylalkhol bzw. dessen Mischungen mit anderen reaktiven Furanderivaten bzw. reaktiven Lösungsmitteln, ein. Die Anwendungs- bzw. Verarbeitbarkeitsdauer der frisch hergestellten selbsthärtenden Kittmischung, d.h. der Zeitabschnitt zwischen dem Mischen der Komponenten A) + B) + C) und dem Verlust der Verarbeitungskonsistenz sollte vorzugsweise mindestens 30 Minuten bis 2 Stunden betragen, damit eine bequeme und sorgfältige Verarbeitung des Kittes möglich ist. Nach der Verarbeitung ist es wünschenswert, daß der Kitt bei Raumtemperatur in möglichst kurzer Zeit durchhärtet und alsbald seine zu erwartende adhäsive Wirksamkeit, Festigkeit und Beständigkeit gegen Chemikalien, Lösungsmittel und thermische Beanspruchungen gewinnt.

Zur Herstellung von härtbaren Beschichtungsmassen können die erfindungsgemäßen härtungsreaktiven phenolharzmodifizierten Furanharze vorzugsweise auch in nichtreaktiven, inerten organischen Lösungsmitteln, wie sie im Bereich der Lacktechnologie üblich sind, gelöst werden. Diese Lösungen können vor ihrer Anwendung mit einem vernetzungswirksamen Säurekatalysator, z.B. wie vorstehend unter C) als Härter aufgeführt, sowie gegebenenfalls zusätzlich mit weichmachenden Substanzen, vorzugsweise mit Epoxidharzen, vermischt und nach der Applikation vernetzt bzw. gehärtet werden. Die Vernetzung bzw. Härtung erfolgt vorzugsweise in der Wärme bei Temperaturen von > 130 °C, insbesondere bei Einbrenntemperaturen zwischen 200 und 250 °C.

Die erfindungsgemäß resultierenden gehärteten Kitte und Beschichtungsmassen besitzen eine sehr gute Lösungsmittel- und Chemikalienbeständigkeit. Sie sind von ausgezeichneter thermischer Stabilität und besitzen bei ihrer Verwendung als Bindemittel für keramische Ausmauerungen und Fugenausfüllmassen überraschend hohe Dauertemperaturbeständigkeiten. Sie werden vorzugsweise als Bindemittel zum Ausmauern von Rauchgasreinigungsanlagen und Schornsteinen mit Plattenbelägen aus säurefesten und thermostabilen keramischen Materialien verwendet, insbesondere in gewerblich genutzten und in großtechnischen Anlagen.

Die Erfindung wird durch die nachstehenden Beispiele näher erläutert. In den Beispielen bedeutet GT = Gewichtsteile.

**Beispiel 1**

**1. Herstellung einer härtungsreaktiven, phenolharzmodifizierten Furanharzlösung**

**1.1. Herstellung des Ausgangs-Alkylidenpolyphenols**

940 GT Phenol, 9,4 GT Oxalsäure und 500 GT wäßriger Formaldehyd (30 gew.-%ig) werden drei Stunden unter Rückfluß gekocht. Anschließend werden zunächst unter Normaldruck, dann unter Wasserstrahlvakuum - bis zu einer Sumpftemperatur von 220°C ansteigend - die flüchtigen Anteile aus dem Reaktionsgemisch entfernt. Die Temperatur von 220°C wird noch eine Stunde gehalten. Es fallen 700 Teile eines Alkylidenpolyphenols mit einem Erweichungspunkt von 47°C und einem Gehalt von 0,03 Gew.-% an freiem Phenol an.

### 1.2. Umsetzung des Alkylidenpolyphenols mit Furfurylalkohol

1545 GT des aus Beispiel 1.1 erhaltenen Alkylidenpolyphenols werden in 735 GT Furfurylalkohol und 100 GT Xylol gelöst, 4 GT Maleinsäureanhydrid zugegeben und die Mischung in einem Glaskolbenreaktor, der mit Rührer, Thermometer, Rückflußkühler und Wasserabscheider ausgestattet ist, auf 180 °C erhitzt. Der Wasserabscheider wurde vorher mit Xylol gefüllt. Unter Rühren des Reaktionsgemisches scheiden sich im Laufe von 3,5 Stunden destillativ 136 GT Wasser im Wasserabscheider ab. Die Wasserabscheidung beginnt bei 142 °C. Nach Beendigung der Kondensationsreaktion und damit auch der Wasserabscheidung wird Wasserstrahlvakuum angelegt, und es werden bis zu einer Sumpftemperatur von 200 °C alle destillierbaren Bestandteile abdestilliert. Es fallen 141 GT Vakuumdestillat an.

Im Reaktor verbleiben 2119 GT härtungsreaktives phenolharzmodifiziertes Furanharz. Diese werden in 1954 GT Furfurylalkohol unter Bildung einer härtungsreaktiven phenolharzmodifizierten Furanharzlösung gelöst.

Nach erfolgter Abtrennung eines Rückstandes von 47,6 GT Feststoff im Anschluß an ein einstündiges Erwärmen der härtungsreaktiven phenolharzmodifizierten Furanharzlösung auf 200 °C beträgt die Viskosität der resultierenden rückstandsfreien Harzlösung 896 mPa.s, gemessen im Höppler-Viskosimeter nach DIN 53015 bei 23 °C.

### 1.3. Kittherstellung

Es wird aus 96,5 GT Kohlenstoffpulver (Koksmehl) und 3,5 GT wäßriger Phenolsulfonsäure-Harnstoff-Addukt-Lösung, die 65 Gew.-% Phenolsulfonsäure enthält, ein Kittmehl hergestellt. Für die Herstellung eines selbsthärtenden Kittes werden 60 GT der rückstandsfreien Harzlösung aus Beispiel 1.2 mit 100 GT des Kittmehls vermischt. Der daraus hergestellte selbsthärtende Kitt hat eine Gebrauchsdauer von 50 Minuten bei Raumtemperatur. Nach 24 Stunden hat der ausgehärtete Kitt eine Shore-Härte D von 65.

### 1.4. Kittprüfung

#### 1.4.1. Chemische Prüfung

Für die Bestimmung der chemischen Beständigkeit werden aus dem selbsthärtenden Kitt aus Beispiel 1.3. zylindrische Kittprüfkörper mit einer Höhe und einem Durchmesser von jeweils 25 mm durch entsprechende Formung der plastischen Kittmasse und Aushärtenlassen hergestellt und diese Prüfkörper 8 Tage lang bei Raumtemperatur gelagert. Nach dieser Zeit sind die ausgehärteten Prüfkörper beständig gegen siedende 70 gew.-%ige Schwefelsäure, siedende konzentrierte Salzsäure sowie gegen Butylacetat und Toluol, wie entsprechend durchgeführte Prüfungen in 40 Stunden-Tests zeigen.

#### 1.4.2. Physikalische Prüfung

Die Messung der Linearschwindung bei der Kitthärtung erfolgt an analog dem Beispiel 1.4.1 hergestellten zylindrischen selbsthärtenden Kittprüfkörpern von 25 mm Durchmesser und 90 mm Länge, an deren Enden Meßmarkierungen aus Glas von jeweils 5 mm Länge angebracht sind. Die Gesamtlänge einschließlich der Meßmarkierungen beträgt ca. 100 mm. Die Prüfung erfolgt in Anlehnung an die Prüfmethode gemäß ASTM C 358. Die erste Längenmessung erfolgt 24 Stunden nach Herstellung der selbsthärtenden Prüfkörper und dient als Ausgangswert. Innerhalb eines Beobachtungszeitraumes von 100 Tagen beträgt die Schwindung bei Raumtemperatur 0,16 %.

Die Bestimmung des Biege-Elastizitäts-Moduls (E-Modul) erfolgt an ausgehärteten Kittprüfkörpern des Formats 10 x 15 x 120 mm.

Der Wert für den E-Modul des nach Beispiel 1.3. hergestellten und in Prüfkörperform ausgehärteten Kittes beträgt nach 8 Tagen Lagerung der Prüfkörper bei Raumtemperatur 0,65 $10^4$ N/mm$^2$.

#### 1.4.3. Prüfung der thermischen Beständigkeit

Zur Bestimmung der thermischen Beständigkeit werden ausgehärtete zylindrische Kittprüfkörper mit einem Durchmesser von 50 mm und einer Höhe von 50 mm verwendet. Diese Prüfkörper werden bis zu einer Temperatur von 300 °C in einem Wärmeschrank, oberhalb von 300 °C in einem Ofen temperiert. Die Temperierung erfolgt an der Luft nach folgendem Programm:

Die ausgehärteten Kittprüfkörper werden zunächst 8 Tage bei Raumtemperatur gelagert. Dann erfolgt:

Im Trockenschrank:

1. Aufheizen von Raumtemperatur auf 90 °C innerhalb von 8 Stunden (h)

2. Halten der Temperatur von 90 °C während 16 h

3. Aufheizen von 90 °C auf 150 °C innerhalb von 8 h

4. Halten der Temperatur von 150 °C während 16 h

5. Aufheizen von 150 °C auf 200 °C innerhalb von 8 h

6. Halten der Temperatur von 200 °C während 16 h

7. Aufheizen von 200 °C auf 250 °C innerhalb von 8 h

8. Halten der Temperatur von 250 °C während 16 h

9. Aufheizen von 250 °C auf 300 °C innerhalb von 8 h

10. Halten der Temperatur von 300 °C während 16 h Im Ofen:

11. Aufheizen von 300 °C auf 350 °C innerhalb von 8 h

12. Halten der Temperatur von 300 °C während 16 h

13. Aufheizen von 350 °C auf 400 °C innerhalb von 8 h

14. Halten der Temperatur von 400 °C während 16 h

15. Aufheizen von 400 °C auf 450 °C innerhalb von 8 h

16 Halten der Temperatur von 450 °C während 16 h

17. Aufheizen von 450 °C auf 500 °C innerhalb von 8 h

18. Halten der Temperatur von 500 °C während 16 h

Die Messung bzw. Beurteilung der Prüfkörper auf Druckfestigkeit in $N/mm^2$, ermittelt in einer hydraulischen Plattenpresse, Oberflächenglanz, visuell ermittelt, Kreiden, durch manuellen Reibetest ermittelt, Bersten bei thermischer Behandlung und Gewichtsveränderung bei thermischer Behandlung erfolgt nach jedem Temperaturschritt an separaten Prüfkörpern jeweils bei Raumtemperatur (20 °C). Die Beständigkeit gegen 70 gew.-%ige Schwefelsäure wird im 40 Stunden-Test bei 150 °C gemessen, die Beständigkeit gegen Aceton im 40 Stunden-Test bei der Siedetemperatur des Acetons. Es werden für jede Prüfung je drei Prüfkörper entnommen, untersucht und die Mittelwerte gebildet. Die Ergebnisse sind in der Tabelle 1 zusammengefaßt wiedergegeben.

Vergleichsbeispiel 1

**Nacharbeitung von Beispiel 1 der EP-OS 0 184 106**

**1.1. Herstellung einer härtungsreaktiven, epoxidharzmodifizierten Furanharzlösung**

1425 GT eines Epoxidharzes auf Basis von Diphenylolpropan und Epichlorhydrin mit einem durchschnittlichen Epoxidäquivalentgewicht von 425 werden in einem mit Rührer und Thermometer ausgestatteten Reaktionsgefäß in 2013 GT Furfurylalkohol gelöst und auf eine Temperatur von 60 °C gebracht. Nach Zugabe von 25,5 GT 33 gew.-%iger wäßriger Natronlauge wird das Umsetzungsgemisch auf 100 °C erwärmt und 4 Stunden bei dieser Temperatur gerührt. Anschließend wird zur Vervollständigung der Umsetzung das Reaktionsgemisch eine weitere Stunde auf 170 °C erhitzt, wonach die entstandene und von geringen Mengen fester Rückstände abgetrennte Harzlösung einen Festkörpergehalt von 49,3 Gew.-% und eine Viskosität von 1250 mPa.s, gemessen im Höpplerviskosimeter nach DIN 53 015 bei 20 °C, besitzt. Der Alkalikatalysator wird durch Zusatz von 19,1 GT wäßriger, 80 gew.-%iger Milchsäure neutralisiert, wobei eine härtungsreaktive epoxidharzmodifizierte Furanharzlösung mit einer Viskosität von 1200 mPa.s, gemessen bei 20 °C, erhalten wird.

**1.2. Kittherstellung**

Es wird aus 93 GT Kohlenstoffpulver (Koksmehl) und 6 GT eines ß-Naphthalinsulfonsäure-Harnstoff-Adduktes sowie 1 GT p-Toluolsulfonsäure ein Kittmehl (100 GT) hergestellt und mit 60 GT der härtungsreaktiven epoxidharzmodifizierten Furanharzlösung aus Vergleichsbeispiel 1.1. vermischt. Der daraus resultierende selbsthärtende Kitt hat bei 20 °C eine Gebrauchsdauer von 75 Minuten und erreicht nach 24-stündiger Aushärtung eine Shore-Härte D von 45.

## 1.3. Kittprüfung

### 1.3.1. Chemische Prüfung

Für die Bestimmung der chemischen Beständigkeit werden aus dem nach Vergleichsbeispiel 1.2. hergestellten selbsthärtenden Kitt zylindrische Kittprüfkörper mit einer Höhe und einem Durchmesser von jeweils 25 mm durch entsprechende Formung der plastischen Kittmasse und Aushärtenlassen hergestellt und die Prüfkörper 8 Tage lang bei 20 °C gelagert. Nach dieser Zeit sind die ausgehärteten Prüfkörper beständig gegen siedende 70 gew.-%ige Schwefelsäure, siedende konzentrierte Salzsäure sowie gegen konzentrierte und verdünnte Natronlauge, wie die Ergebnisse von entsprechend durchgeführten Prüfungen in 40 Stunden-Tests zeigen.

### 1.3.2. Physikalische Prüfung

Die Messung der Linearschwindung bei der Kitthärtung erfolgt an analog dem Vergleichsbeispiel 1.3.1. hergestellten zylindrischen selbsthärtenden Kittprüfkörpern von 25 mm Durchmesser und 90 mm Länge, an deren Enden Meßmarkierungen aus Glas von jeweils 5 mm Länge angebracht sind. Die Gesamtlänge einschließlich der Meßmarkierungen beträgt 100 mm. Die Prüfung erfolgt in Anlehnung an die Prüfmethode gemäß ASTM C 358. Die erste Längenmessung erfolgt 24 Stunden nach Herstellung der selbsthärtenden Prüfkörper und dient als Ausgangswert. Innerhalb eines Beobachtungzeitraumes von 94 Tagen beträgt die Schwindung bei Raumtemperatur 0,18 %.

### 1.3.3. Thermische Beständigkeit

Die Prüfung der thermischen Beständigkeit der ausgehärteten Kittprüfkörper erfolgt analog Beispiel 1.4.3. Die Ergebnisse sind in der Tabelle 1 zusammengefaßt wiedergegeben.

Wie die Ergebnisse in Tabelle 1 zeigen, besitzen die erfindungsgemäßen Prüfkörper des Beispiels 1, insbesondere im Temperaturbereich zwischen 200 und 400 °C, deutlich vorteilhaftere Eigenschaften als die Prüfkörper des Vergleichsbeispiels 1, was den erfindungsgemäßen Produkten interessante Anwendungsmöglichkeiten eröffnet.

**Patentanspr üche**

1. Härtbare phenolharzmodifizierte Furanharze für Kitte und Beschichtungsmassen auf der Basis von Kondensationsprodukten aus Furanverbindungen und Phenolen sowie deren Lösungen in organischen

Tabelle 1     Eigenschaftsveränderungen von gehärteten Kittprüfkörpern aus Beispiel 1 und Vergleichsbeispiel 1 durch thermische Langzeitbehandlung    zwischen 20 und 400 °C

| Prüfkörperbe- handlungsdauer in Stunden (h) bei verschiedenen Temperaturen (°C) | Druckfestigkeit N/mm² | | Oberflächenglanz | | Kreiden | | Bersten bei ther- mischer Behandlung | | Gewichtsverlust bei thermischer Behand- lung (Gew.-%) | | Chemische Beständig- keit gegen Schwefel- säure, 70 gew.-%ige, bei 150 °C Gewichtsveränderung im 40 Stunden-Test (Gew.-%) | | Chemische Beständig- keit gegen Aceton bei Siedetemperatur Gewichtsveränderung im 40 Stunden-Test (Gew.-%) | |
|---|---|---|---|---|---|---|---|---|---|---|---|---|---|---|
| Prüfkörper aus Bei- spiel bzw. Vgl.-Beisp. | Beisp. 1 | Vgl.-Beisp.1 | Beisp. 1 | Vgl.-Beisp.1 | Beisp. 1 | Vgl.-Beisp.1 | Beisp. 1 | Vgl.-Beisp.1 | Beisp. 1 | Vgl.-Beisp.1 | Beisp. 1 | Vgl.-Beisp.1 | Beisp. 1 | Vgl.-Beisp.1 |
| Raumtemperatur nach 8 Tagen | 44,2 | 37,3 | ja | ja | nein | nein | nein | nein | 0,04 | 0,06 | −1,468 | +1,591 | | |
| +16 h 90 °C | 62,2 | 58,8 | " | " | " | " | " | " | 0,15 | 0,33 | −1,298 | +0,019 | +7,492 | +3,131 |
| +16 h 150 °C | 62,0 | 41,4 | " | " | " | " | " | " | 0,66 | 2,86 | −0,569 | +0,940 | −0,075 | −0,024 |
| +16 h 200 °C | 43,7 | 23,4 | " | " | " | " | " | " | 4,55 | 6,51 | +0,339 | +2,520 | +0,319 | +1,003 |
| +16 h 250 °C | 38,7 | 22,6 | " | etwas | " | " | " | " | 5,75 | 8,27 | +0,671 | +0,388 | +0,209 | +1,525 |
| +16 h 300 °C | 35,7 | 14,4 | etwas | nein | " | ja | " | ja | 7,30 | 13,22 | +0,889 | +4,309 | +0,365 | +4,544 |
| +16 h 350 °C | 31,6 | | " | | etwas | | " | | 10,83 | | +2,472 | | +1,317 | |
| +16 h 400 °C | 18,0 | | nein | | ja | | " | | 32,78 | | | | | |

Lösungsmitteln, dadurch gekennzeichnet, daß die härtbaren phenolharzmodifizierten Furanharze aus Kondensationsprodukten von Alkylidenpolyphenolen vom Novolaktyp und Furfurylalkohol oder Gemischen aus Furfurylalkohol und anderen reaktiven Furanderivaten, vorzugsweise aus Furfurylalkohol, bestehen, in denen die Alkylidenpolyphenole in ortho- und/oder para-Stellungen zu den phenolischen Hydroxylgruppen durch 2-Furylmethylreste substituiert sind, die durch Umsetzung von Alkylidenpolyphenolen und Furfurylalkohol oder dessen Gemischen mit anderen reaktiven Furanderivaten in Gegenwart von schwach sauren Katalysatoren unter Wasserabspaltung bei Reaktionstemperaturen von 80 bis 250 °C, vorzugsweise 140 bis 250 °C, insbesondere 150 bis 220 °C, erhalten wurden, wobei der saure Katalysator nach beendeter Umsetzung gegebenenfalls neutralisiert oder eliminiert wurde, oder die Furanharze mit im Reaktionsgemisch verbliebenem überschüssigem oder nachträglich beigemischtem Furfurylalkohol oder dessen Gemischen mit anderen reaktiven organischen Lösungsmitteln, vorzugsweise aus der Gruppe Furfurol, Hydroxymethylfurfurol, Difuryläther und Hydroxybenzylalkohol, insbesondere Furfurylalkohol, gegebenenfalls mit zusätzlichen Anteilen inerter Lösungsmittel, härtungsreaktive, gegebenenfalls niedrigviskose Harzlösungen bilden.

2. Härtbare phenolharzmodifizierte Furanharze nach Anspruch 1, dadurch gekennzeichnet, daß die Furanharze als phenolische Komponente Einheiten aus mehrkernigen Phenolen mit mindestens zwei OH-Gruppen im Molekül enthalten, die jeweils mehr als ein reaktives Kernwasserstoffatom in ortho-/ortho- und/oder para-Stellung pro phenolischer OH-Gruppe und ein Molekulargewicht von vorzugsweise 200 bis 3000, insbesondere 300 bis 800, besitzen.

3. Härtbare phenolharzmodifizierte Furanharze nach Anspruch 1 oder 2, dadurch gekennzeichnet, daß die Furanharze als Furankomponente Einheiten aus Furfurylalkhol oder aus dessen Mischungen mit Furanderivaten aus der Gruppe Furfurol und Hydroxymethylfurfurol, wobei der Anteil des Furfurylalkohols mindestens 50 Gew.-%, vorzugsweise mindestens 70 Gew.-%, bezogen auf die Mischung der Furanderivate, beträgt, enthalten.

4. Härtbare phenolharzmodifizierte Furanharze nach Ansprüchen 1 bis 3, dadurch gekennzeichnet, daß bei der Kondensationsreaktion zur Herstellung der Furanharze das Mengenverhältnis der phenolischen Komponente zur Furfurylalkoholkomponente, berechnet auf der Basis des molaren phenolischen Äquivalentgewichts der Alkylidenpolyphenole und des molaren Äquivalentgewichts des reaktiven Furfurylalkohols bzw. dessen Mischungen mit anderen reaktiven Furanderivaten 0,1 bis 1,5 Mol, vorzugsweise 0,2 bis 0,8 Mol, Furfurylalkohol bzw. dessen äquivalentem Gemisch mit anderen Furanderivaten pro Moläquivalent phenolischer Hydroxylgruppe beträgt.

5. Härtbare phenolharzmodifizierte Furanharze nach Ansprüchen 1 bis 4, dadurch gekennzeichnet, daß die Furanharze als härtungsreaktive Lösungen in reaktiven Lösungsmitteln, vorzugsweise in Furfurylalkohol oder dessen Mischungen mit anderen reaktiven Lösungsmitteln aus der Gruppe Furfurol, Hydroxymethylfurfurol, Difuryläther, Hydroxybenzylalkohol, vorliegen, die zusätzlich inerte organische Lösungsmittel, vorzugsweise Toluol oder Xylol, enthalten können, wobei der Anteil an härtungsreaktivem Furanharz vorzugsweise 10 bis 75 Gew.-%, insbesondere 25 bis 70 Gew.-%, besonders bevorzugt 35 bis 55 Gew.-%, bezogen auf die gesamte härtungsreaktive Furanharzlösung, beträgt und die Viskosität der Furanharzlösungen vorzugsweise im Bereich von 50 bis 20000 mPa.s, insbesondere 100 bis 1500 mPa.s, gemessen im Höppler-Viskosimeter nach DIN 53015 bei 23 °C, liegt.

6. Härtbare phenolharmodifizierte Furanharze nach Ansprüchen 1 bis 5, dadurch gekennzeichnet, daß sie als plastifizierende Zusatzkomponente Epoxidharze enthalten.

7. Selbsthärtende Kitte und Beschichtungsmassen, dadurch gekennzeichnet, daß sie eine härtungsreaktive Lösung eines härtbaren phenolharzmodifizierten Furanharzes in einem Furfurylalkhol enthaltenden Lösungsmittel nach Ansprüchen 1 bis 6, einen Füllstoff und einen Härter für die Furanharzlösung enthalten und durch Vermischen folgender Komponenten erhältlich sind:

A) Einem härtungsreaktiven phenolharzmodifizierten Furanharz auf der Basis von Kondensationsprodukten aus Alkylidenpolyphenolen und Furfurylalkohol oder Mischungen von Furfurylalkohol mit anderen reaktiven Furanderivaten, hergestellt in Gegenwart eines sauren Katalysators bei Reaktionstemperaturen von vorzugsweise 80 bis 250 °C und gelöst in Furfurylalkohol oder dessen Gemischen mit anderen reaktiven Furanderivaten oder anderen reaktiven organischen Lösungsmitteln, gegebenenfalls unter Zusatz von inerten organischen Lösungsmitteln,

B) mindestens einem Füllstoff, vorzugsweise aus der Gruppe Gesteinsmehle, feinpulverige Tone, Schamottemehle, Quarzmehle, Bariumsulfatpulver, Kohlepulver, Koksmehl, Graphitmehl, und
C) mindestens einem sauren Härtungskatalysator für die Harzlösung A), vorzugsweise aus der Gruppe stark saurer oder starke Säuren bildender Substanzen.

8. Selbsthärtende Kitte und Beschichtungsmassen nach Anspruch 7, dadurch gekennzeichnet, daß das Gewichtsverhältnis der härtungsreaktiven Lösung A) des härtungsreaktiven phenolharzmodifizierten Furanharzes zu der Summe der Komponenten B) und C) vorzugsweise 1 : 0,5 bis 7, insbesondere 1 : 1 bis 4, beträgt und die Vermischung der Komponenten A), B) und C) vorzugsweise bei normaler Raumtemperatur und vorzugsweise in einem Kneter erfolgt.

9. Verfahren zur Herstellung von selbsthärtenden Kitten und Beschichtungsmassen durch Vermischen der Komponenten A), B) und C) nach Anspruch 7 oder 8.

10. Lagerungsstabile härtungsreaktive Lösungen eines härtbaren phenolharzmodifizierten Furanharzes in einem Furfurylalkohol enthaltenden Lösungsmittel nach Anspruch 7 A) als Bindemittel zur Herstellung von selbsthärtenden Kitten und Beschichtungsmassen.

11. Selbsthärtende Kitte und Beschichtungsmassen nach Ansprüchen 7 bis 9, dadurch gekennzeichnet, daß bei ihrer Herstellung die Füllstoffe B) und der saure Härtungskatalysator C) in vorgemischter Pulverform als sogenannte Kittmehle eingesetzt werden, in denen der Anteil der Härterkomponente C) vorzugsweise 4 bis 12 Gew.-%, insbesondere 6 bis 8 Gew.-%, bezogen auf das Gemisch aus Füllstoff B) und Härter C), beträgt.

12. Gehärtete Kitte und Beschichtungsmassen, hergestellt nach Ansprüchen 7 bis 9 oder 11, als Bindemittel und Dichtungsmassen für keramische Ausmauerungen mit hoher Dauertemperaturbeständigkeit und Chemikalienbeständigkeit, sowie für Beschichtungen mit hoher Thermostabilität und Chemikalienbeständigkeit.

13. Selbsthärtende Beschichtungsmassen aus Lösungen eines härtbaren phenolharzmodifizierten Furanharzes nach Ansprüchen 1 bis 4, dadurch gekennzeichnet, daß sie inerte organische Lösungsmittel, mindestens eine weichmachende Substanz, vorzugsweise ein Epoxidharz, und einen vernetzungswirksamen Säurekatalysator enthalten, der eine Härtung des Furanharzes vorzugsweise bei Temperaturen von über 130 °C, insbesondere zwischen 200 und 250 °C, bewirkt.

14. Verfahren zur Herstellung von phenolharzmodifizierten Furanharzen für Kitte und Beschichtungsmassen auf der Basis von Kondensationsprodukten aus Furanverbindungen und Phenolen sowie deren Lösungen in organischen Lösungsmitteln nach Ansprüchen 1 bis 6, dadurch gekennzeichnet, daß man Alkylidenpolyphenole vom Novolaktyp und Furfurylalkohol oder Gemische aus Furfurylalkohol und anderen reaktiven Furanderivaten unter Zusatz von schwach sauren Katalysatoren unter Wasserabspaltung, vorzugsweise unter kontinuierlicher destillativer Auskreisung des Reaktionswassers mittels eines inerten Schleppmittels, bei Reaktionstemperaturen von 80 bis 250 °C, vorzugsweise 140 bis 250 °C, insbesondere 150 bis 220 °C, umsetzt, den sauren Katalysator nach beendeter Kondensationsreaktion gegebenenfalls neutralisiert oder eliminiert und das Furanharz gewinnt, oder daß man das Furanharz mit im Reaktionsgemisch verbliebenen überschüssigen oder nachträglich beigemischten reaktiven organischen Lösungsmitteln, vorzugsweise aus der Gruppe Furfurylalkohol, Furfurol, Hydroxymethylfurfurol, Difuryläther und Hydroxybenzylalkohol, insbesondere Furfurylalkohol, gegebenenfalls mit zusätzlichen Anteilen inerter Lösungsmittel, in eine härtungsreaktive, gegebenenfalls niedrigviskose, lagerungsstabile Harzlösung überführt und isoliert.

15. Verwendung von gelösten härtungsreaktiven phenolharzmodifizierten Furanharzen nach Ansprüchen 1 bis 13 bzw. hergestellt nach Anspruch 14 in Kombination mit Füllstoffen und Härtern oder gegebenenfalls ohne Füllstoffe zum Verfugen, Kitten oder Beschichten von Gegenständen sowie zum Auskleiden von Rauchgasreinigungsanlagen und Schornsteinen mit Plattenbelägen aus säurefesten und thermostabilen keramischen Materialien.

16. Gegenstände, gekittet, verfugt oder beschichtet mit ausgehärteten Kitten oder Beschichtungsmassen nach Ansprüchen 1 bis 15, enthaltend ein ausgehärtetes phenolharzmodifiziertes Furanharz, das

13

gegebenenfalls in Kombination mit Furfurylalkohol oder Mischungen aus Furfurylalkohol und anderen reaktiven Furanderivaten ausgehärtet wurde.